Europäisches Patentamt

European Patent Office

Office européen des brevets

(19)

(11) **EP 0 678 483 B1**

(12) **FASCICULE DE BREVET EUROPEEN**

(45) Date de publication et mention
de la délivrance du brevet:
**23.12.1998 Bulletin 1998/52**

(51) Int. Cl.$^6$: **C03C 17/36**, C03C 17/34

(21) Numéro de dépôt: **95111031.1**

(22) Date de dépôt: **23.04.1992**

(54) **Substrat en verre revêtu de multicouches minces pour la protection solaire**

Glassubstrat mit einer dünnen Mehrschichtbekleidung für Sonnenschutz

Glass substrate with a thin multilayer coating for solar protection

(84) Etats contractants désignés:
**AT BE CH DE DK ES FR GB GR IT LI LU NL PT SE**

(30) Priorité: **30.04.1991 FR 9105328**
**30.04.1991 FR 9105329**
**30.04.1991 FR 9105330**

(43) Date de publication de la demande:
**25.10.1995 Bulletin 1995/43**

(62) Numéro(s) de document de la (des) demande(s)
initiale(s) en application de l'article 76 CBE:
**92401148.9 / 0 511 901**

(73) Titulaire: **SAINT-GOBAIN VITRAGE**
**92400 Courbevoie (FR)**

(72) Inventeurs:
• **Beaufays, Jean-Pierre**
**B-5190 Jemeppe S/Sambre (BE)**
• **Halleux, Jean-Marc**
**B-5081 Meux, (La Bruyere) (BE)**

• **Devigne, Roland**
**B-5060 Falisolle (BE)**

(74) Mandataire:
**Renous Chan, Véronique**
**Saint-Gobain Recherche,**
**39, Quai Lucien Lefranc**
**F-93300 Aubervilliers (FR)**

(56) Documents cités:
**EP-A- 0 239 280        EP-A- 0 386 993**
**EP-A- 0 404 282        EP-A- 0 438 357**
**DE-A- 4 006 029        GB-A- 2 138 026**
**US-A- 4 773 717**

• **PATENT ABSTRACTS OF JAPAN vol. 013 no. 402**
**(C-633) ,6 Septembre 1989 & JP-A-01 145351**
**(ASAHI GLASS CO LTD) 7 Juin 1989,**

Remarques:
Le dossier contient des informations techniques
présentées postérieurement au dépôt de la
demande et ne figurant pas dans le présent
fascicule.

**Description**

L'invention concerne le domaine des vitrages pour l'isolation thermique et/ou la protection solaire, et plus particulièrement un substrat en verre muni de couches minces fonctionnelles déposées sous vide.

Ce type de substrat à multicouches est ici destiné plus particulièrement à l'équipement des bâtiments. En effet, en agissant sur la quantité d'énergie du rayonnement solaire, il permet d'éviter, à l'intérieur des locaux, un échauffement excessif particulièrement inconfortable en été, et contribue ainsi à limiter la consommation d'énergie nécessaire à la climatisation desdits locaux. Ce point est d'autant plus crucial que la tendance actuelle est d'augmenter la proportion des surfaces vitrées sur les façades des bâtiments.

Il existe cependant d'autres exigences pour que de tels substrats à couches soient utilisables dans le bâtiment, et tout d'abord une exigence de durabilité des couches minces, spécialement dans le cas où ils sont destinés à être utilisés comme vitrages monolithiques.

Il est en effet important que ce substrat revêtu de couches minces soit utilisable éventuellement en vitrage monolithique. Cela implique que les couches minces doivent se révéler résistantes dans le temps, même sans que les couches soient protégées comme ce serait le cas à l'intérieur d'un vitrage feuilleté ou d'un vitrage multiple type double vitrage. Or, en vitrage monolithique, les couches minces sont directement soumises à des aggressions aussi bien d'ordre mécanique, par exemple par frottement créant des rayures entraînant des défauts d'aspect aussi bien vus en transmission qu'en réflexion, qu'à des agressions d'ordre chimique, par exemple au contact de l'humidité et/ou de la pollution de l'atmosphère ambiante ou lorsqu'on nettoie le vitrage avec des produits chimiques.

On ne doit pas non plus négliger une exigence d'ordre esthétique : il est souhaitable, que le vitrage, en réflexion extérieure puisse présenter des teintes diversifiées et notamment plutôt douces, pastel.

Il n'est pas nécessaire usuellement d'avoir, pour le bâtiment, des vitrages à très haute transmission lumineuse comme cela peut être le cas pour l'automobile, pour les pare-brise par exemple, mais il est néanmoins intéressant de pouvoir proposer des vitrages ayant différents niveaux de transmission lumineuse.

Quant au procédé d'obtention des couches minces, les techniques de dépôt sous vide, notamment utilisant la pulvérisation cathodique, sont bien connues et permettent de bien maîtriser les performances optiques des couches obtenues. On connaît en particulier celles qui s'effectuent en présence d'un champ magnétique qui multiplie les chocs des ions sur la cible et accélère le dépôt. On peut citer par exemple le brevet DE-24 63 431 C2, qui présente un tel procédé utilisant un magnétron planar, et le brevet US-4 116 806, qui utilise une cible en forme de courroie, dite "belt track".

De même on connaît les techniques de pulvérisation cathodique réactive qui permettent d'obtenir une couche mince en faisant réagir le matériau de la cible avec un gaz du plasma, le brevet US-3 907 660 présente ainsi une telle méthode pour le dépôt d'oxyde métallique sur du verre.

Parmi les couches minces métalliques et autres agissant sur le rayonnement solaire, notamment en diminuant la transmission énergétique $T_E$ aussi bien par absorption que par réflexion, on connaît des couches à base d'alliage de chrome-nickel ou de fer-chrome-nickel. Ainsi le brevet US-4 022 947 présente plus particulièrement un substrat en verre muni d'une couche faite à partir de l'un de ces alliages et d'une couche de l'oxyde correspondant audit alliage. Cette couche d'oxyde est placée soit sur la couche fonctionnelle, elle-même déposée sur le substrat, soit entre le substrat et ladite couche fonctionnelle. Dans le premier cas, elle a un rôle essentiellement protecteur, mais sans que soit chiffrée cette protection. Dans le deuxième cas, elle a un rôle essentiellement interférentiel pour modifier la coloration côté verre, mais sans en indiquer l'intensité.

Il est par ailleurs connu de la demande de brevet EP-0 386 993 un verre que l'on peut traiter thermiquement et qui est revêtu d'un empilement de couches consistant essentiellement en une couche fonctionnelle en un alliage à fort taux de nickel, surmontée d'une couche d'oxyde d'étain et, optionnellement, disposée sur une sous-couche également en oxyde d'étain. Une couche d'aluminium peut également être prévue entre la couche fonctionnelle et la couche qui la surmonte.

Il est connu de la demande de brevet GB-2 138 026 un vitrage à transmission dans le visible comprise entre 5 et 40 %, muni d'un revêtement comprenant une première couche d'oxyde d'épaisseur optique 20 à 280 nm, puis une couche de nitrure de chrome d'épaisseur géométrique comprise entre 10 et 40 nm.

Il est connu de la demande de brevet japonaise JP-A-1 145 351 un vitrage revêtu d'un empilement comprenant une première couche de diélectrique du type $TiO_2$, une seconde couche de nitrure du type TiN ou ZrN et une troisième couche d'oxyde de tantale.

Le but de l'invention est donc l'obtention d'un substrat à multicouches minces, remplissant efficacement une fonction de protection solaire, très résistant du côté de ces couches à la fois mécaniquement et chimiquement, et offrant une palette de colorations et de puretés de teinte en réflexion côté verre diversifiées.

Selon l'invention, le substrat en verre comporte une couche fonctionnelle appartenant à la famille des aciers inoxydables (comme l'acier 316 L norme A.I.S.I.). De préférence, ledit alliage est nitruré, ce qui lui confère une plus grande résistance mécanique. Son épaisseur est variable, de préférence inférieure à 100 nm et notamment comprise 10 et 100 nm. En effet, c'est cette couche qui donne au vitrage final ses propriétés de protection solaire, en diminuant la valeur de $T_E$. Une autre couche fonctionnelle selon l'invention est à base de tantale, dont on module l'épaisseur en fonction de la transmission lumineuse voulue.

Il est à noter qu'avec ce type de couche, il est impossible d'agir sur ce facteur $T_E$ sans agir également sur le facteur de transmission lumineuse $T_L$, dans la mesure où plus de 50 % de l'énergie solaire se trouve dans la gamme des longueurs d'onde comprises entre 0,38 et 0,78 nm, c'est-à-dire dans le domaine du visible. Cela amène, suivant l'épaisseur de la couche d'alliage utilisé, à proposer des vitrages ayant différents "couples" de valeur $T_L$ et $T_E$, correspondant chacun à un compromis judicieux entre une visibilité en transmission suffisante pour un confort thermique acceptable, ne serait-ce qu'en fonction de la latitude des pays auxquels les vitrages finals sont destinés. Les épaisseurs restent cependant généralement inférieures à 100 nm.

Cette couche à base d'acier inoxydable selon l'invention est placée sur une couche d'oxyde métallique que l'on désignera par le terme de "sous-couche" qui, elle, est déposée directement sur le substrat en verre. Elle est en outre revêtue d'une autre couche de composé métallique que l'on désignera par le terme de "sur-couche".

La sous-couche est avantageusement à base d'oxyde de tantale $Ta_2O_5$, d'oxyde d'étain $SnO_2$ ou d'oxyde de titane $TiO_2$, son épaisseur est comprise entre 10 et 220 nm. Elle a une triple fonction : outre le fait qu'elle favorise l'adhérence de la couche fonctionnelle au substrat, son épaisseur significative lui confère un rôle interférentiel pour agir sur l'aspect en réflexion lumineuse du vitrage, mais aussi un rôle primordial quant à la tenue physico-chimique de l'ensemble de l'empilement des couches. En effet, de manière surprenante, les auteurs de la présente invention ont mis en évidence, comme cité en exemple ultérieurement, le fait que la nature de la sous-couche n'est pas indifférente vis-à-vis du comportement face aux aggressions, notamment d'ordre chimique, de l'ensemble de l'empilement.

Ainsi, si la sous-couche n'est pas choisie de manière adéquate, il peut apparaître une corrosion chimique au niveau de la sous-couche, et plus particulièrement à l'interface verre/sous-couche, ladite corrosion se traduisant par la destruction localisée de la sous-couche et de ce fait entraînant le décollement des couches supérieures. Or très avantageusement, les oxydes choisis pour la sous-couche sont particulièrement résistants chimiquement tant à l'humidité qu'à la pollution et sont donc parfaitement aptes à remplir cette fonction.

La sur-couche est un composé métallique, notamment oxyde ou nitrure, et de préférence en oxyde ou nitrure de titane $TiO_2$ ou TIN ou en oxyde de tantale $Ta_2O_5$. Cette sur-couche a une fonction primordiale de protection d'ordre mécanique et chimique de la couche fonctionnelle qu'elle recouvre. Suivant son épaisseur ainsi que celle de la couche fonctionnelle, elle peut également avoir un rôle inteférentiel et contribuer ainsi à l'aspect en réflexion du vitrage. Son épaisseur est au maximum de 100 nm, et de préférence d'au moins 5 nm.

Le substrat muni de ces couches minces est donc utilisable aussi bien en vitrage monolithique qu'associé à un autre substrat. On l'utilise avantageusement dans le bâtiment et dans l'automobile pour les surfaces vitrées n'exigeant pas des $T_L$ très élevées.

Les détails de caractéristiques avantageuses de l'invention ressortent de la description détaillée du substrat à couches minces selon l'invention, faite en référence au dessin annexé qui représente :

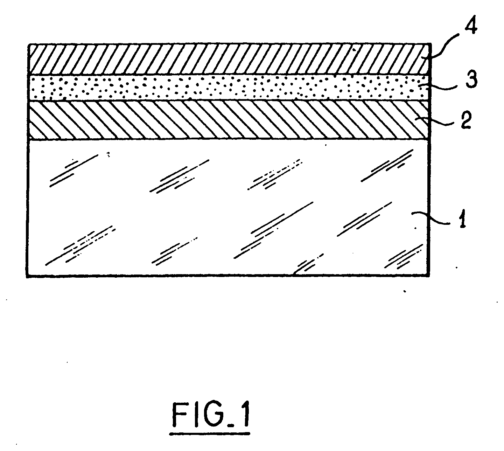

- Figure 1 : un schéma simplifié d'un substrat en verre à couches minces selon l'invention.

Par souci de clarté, les rapports d'épaisseurs n'ont pas été respectés.

On précise que tous ces dépôts de couches minces se font un à un sur le substrat de préférence par la technique de pulvérisation cathodique à magnétron en atmosphère réactive, mais pourraient être effectués par toute technique de dépôt sous vide permettant une bonne maîtrise des épaisseurs des couches déposées.

Les substrats 1 en verre silico-sodo-calcique, notamment flotté, sont introduits par un système de sas dans la chambre de pulvérisation de l'installation de dépôt. Cette chambre de pulvérisation est équipée de cathodes avec cibles en matériaux correspondant aux dépôts à effectuer.

Les dépôts des couches 2, 3, 4 se font par passages successifs du substrat sous la cible métallique et dans l'atmosphère adéquates. Pour former les sous-couches 2, la cible est en tantale, titane ou étain et l'atmosphère est contrôlée et composée essentiellement d'argon et d'oxygène. Pour former les couches fonctionnelles, la cible est en alliage et le dépôt s'effectue dans une atmosphère d'argon et éventuellement d'azote pour former une couche nitrurée. Pour former la sur-couche en oxyde ou en nitrure (les exemples ici se rapporteront plus particulièrement à une sur-couche d'oxyde), on utilise une cible en titane ou tantale et une atmosphère d'argon/oxygène (ou argon/azote dans le cas d'un nitrure).

De manière connue, les puissances appliquées à chacune des cathodes ainsi que la vitesse de défilement du substrat sont ajustées de manière à obtenir les épaisseurs souhaitées pour les couches. Cependant, on n'indiquera pas dans tous les exemples exhaustivement les épaisseurs exactes de la couche fonctionnelle 3, dans la mesure où, de manière bien connue du spécialiste travaillant sur des installations de dépôt de couches sous vide, le but est de contrôler parfaitement les conditions de dépôt, qui varient pour chaque type d'installation, afin d'obtenir très précisément la transmission lumineuse $T_L$ voulue, sans pour autant déterminer systématiquement très exactement l'épaisseur de la couche qui permet d'avoir cette valeur de $T_L$.

On précise tout d'abord que l'on apprécie l'aspect en réflexion extérieure du substrat muni des couches selon l'invention par trois valeurs : la valeur de la réflexion lumineuse extérieure, côté verre, $R_1L$ donnée par la configuration du spectre en réflexion dans le visible dudit substrat compte-tenu de la sensibilité de l'oeil et d'une source lumineuse normalisée désignée par le terme illuminant $D_{65}$, la valeur de la longueur d'onde dominante $\lambda$ dom $(R_1L)$ en nanomètres indiquant la couleur en réflexion, et la pureté d'excitation pe$(R_1L)$ indiquant la "saturation" de cette couleur.

La valeur de la réflexion lumineuse côté intérieur, du côté des couches minces, quant à elle, est notée par la suite $R_2L$.

De plus, on précise dès à présent les tests utilisés pour apprécier la résistance mécanique de l'empilement de couches minces selon l'invention :

- les tests d'abrasion permettant d'évaluer la résistance mécanique des couches sont effectués à l'aide de meules faites de poudre abrasive noyée dans un élastomère. La machine est fabriquée par la Société Taber Instrument Corporation aux Etats-Unis. Il s'agit du modèle 174, "Standard Abrasion Tester", les meules sont de type CS10F chargées de 500 grammes. Chaque échantillon est soumis à 300 rotations, on mesure sa transmission lumineuse à une longueur d'onde de 550 nm avant ($\tau_O$) et après ($\tau_{300}$) abrasion. L'usure à l'abrasion est mesurée par la grandeur U :

$$U \% = \tau_{300} - \tau_O$$

Les tests de résistance chimique normalisés effectués sont les suivants :
- les tests de résistance au contact de brouillards salin neutre et salin cuproacétique répondent à la norme DIN 50021. Ils consistent notamment à mesurer la durée qui s'écoule (en jours) jusqu'au moment où le premier défaut apparaît dans l'empilement de couches minces, quand celui-ci est soumis aux atmosphères normalisées correspondant aux deux tests.
- le test SFW 2,0S de résistance au dioxyde de soufre $SO_2$ répond à la norme DIN 50018. Sur le même principe que les deux tests précédents, il détermine la durée (en cycles de 8 heures d'exposition et suivies de 16 heures de repos) qui s'écoule jusqu'à l'apparition d'une altération qui sera précisée ci-après.

Afin de mettre en évidence les bonnes performances face aux corrosions mécaniques et chimiques des substrats recouverts selon l'invention, on a réalisé un exemple comparatif 1 constitué d'un empilement de trois couches oxyde métallique-alliage métallique nitruré-oxyde métallique sur un même substrat, dont les caractéristiques sont les suivantes :

sous-couche (2)　　: mélange d'oxyde de zinc et d'étain,
　　　　　　　　　de 84 nm
couche (3)　　　　: acier inoxydable 316 norme A.I.S.I.,
　　　　　　　　　de 22 nm
sur-couche (4)　　: oxyde de titane, de 10 nm.

Les caractéristiques photométriques de cet exemple 1 comparatif sont données ci-dessous, sachant que la dernière colonne du tableau suivant indique la couleur en réflexion du côté du substrat:

| EX. | $T_L$ | $R_1L$ | $R_2L$ | $T_E$ | $\lambda$ dom $(R_1L)$ | pe $(R_1L)$ | coul.$R_1L$ |
|-----|-------|--------|--------|-------|----------------------|-------------|-------------|
| 1 | 20 % | 17 % | 43 % | 17 % | 480 | 22 % | bleu |

On obtient en $R_1L$ une couleur bleu pastel.

Les tests de corrosion de cet exemple comparatif 1 donnent les résultats suivants : (ces tests chiffrent la période jusqu'à l'apparition d'une altération de l'empilement qui correspond à une modification de $T_L$ de 10%).

| EX. | abrasion | brouillard salin | brouillard cupro-acétique | dioxyde de soufre |
|-----|----------|------------------|---------------------------|-------------------|
| 1 | 3,7 | 21 | 1 | < 1 |

La faiblesse des résultats aux tests chimiques de l'exemple comparatif 1 semble exclure son utilisation en tant que vitrage monolithique dans des conditions extrêmes d'humidité et/ou de pollution.

Dans l'exemple 2, selon l'invention, la couche (3) contient du fer et la cible est en acier nitruré SST 316 norme A.I.S.I.

Le substrat 1 est en verre silico-sodo-calcique clair flotté de 6 mm d'épaisseur.

On adapte l'épaisseur de la couche 3 dans l'exemple afin d'obtenir la valeur de transmission lumineuse $T_L$ voulue. Ici, elle est comprise entre 10 et 100 nm.

Les épaisseurs en nanomètres de la sous-couche 2 en $TiO_2$ de la couche fonctionnelle 3, de la sur-couche 4 en $TiO_2$, ainsi que la transmission lumineuse $T_L$ de l'ensemble substrat/multicouches sont indiquées ci-dessous :

| EXEMPLE | (2)$TiO_2$ | (3) couche fonctionnelle | (4)$TiO_2$ | $T_L$ |
|---------|-----------|--------------------------|-----------|-------|
| 2 | 15 | 28 | 10 | 21 % |

Afin de mettre en évidence les bonnes performances face aux corrosions mécaniques et chimiques des substrats recouverts selon l'invention, on a comparé cet exemple 2 avec un exemple 3 comparatif constitué d'un empilement similaire de trois couches oxyde métallique-alliage métallique nitruré-oxyde métallique sur un même substrat, dont les caractéristiques sont les suivantes :

sous-couche (2)    : mélange d'oxydes de zinc et d'étain,
                       de 10 nm
couche (3)         : acier inoxydable 316 norme A.I.S.I.,
                       de 20 nm
sur-couche (4)     : oxyde de titane, de 10 nm.

Les caractéristiques photométriques de l'exemple 2, d'une part et 2 comparatif d'autre part sont proches, sachant que la dernière colonne du tableau suivant indique la couleur en réflexion du côté du substrat:

| EX. | $T_L$ | $R_L L$ | $R_2 L$ | $T_E$ | $\gamma$ dom ($R_1 L$) | pe($R_1 L$) | coul($R_1 L$) |
|-----|-------|---------|---------|-------|------------------------|-------------|---------------|
| 2 | 21 % | 25 % | 30 % | 17 % | 504 | 0,8 % | bronze clair |
| 3 | 20 % | 25 % | 35 % | 17 % | 490 | 2,1 % | bronze clair |

Dans les deux cas, on obtient en $R_1 L$ une couleur dans une tonalité bronze très pastel.

Les tests de corrosion de deux substrats monolithiques recouverts donnent cependant des résultats très différents : (ces tests chiffrent la période jusqu'à l'apparition d'une altération de l'empilement correspondant à l'apparition d'un premier défaut visible).

| EX. | abrasion | brouillard salin | brouillard cupro-acétique | dioxyde de soufre |
|-----|----------|------------------|---------------------------|-------------------|
| 2 | 1,5 | > 78 | > 90 | 5 |
| 3 | 2,1 | 14 | 1 | 1 |

La faiblesse des résultats aux tests chimiques de l'exemple 3 comparatif semble exclure son utilisation en vitrage monolithique dans des conditions extrêmes d'humidité et/ou de pollution.

Par contre, l'empilement de l'exemple 2, selon l'invention présente une excellente résistance chimique, qui met en évidence l'effet conjugué surprenant d'une sous-couche en $TiO_2$ et d'une couche métallique contenant du nickel et du chrome (nitruré) et d'une sur-couche en $TiO_2$, ce qui permet d'utiliser là encore un substrat avec ce type d'empilement en vitrage monolithique, quelles que soient les conditions d'utilisation et/ou climatiques auxquelles ledit vitrage est normalement soumis.

On a dans ces exemples choisi pour la sous-couche 2 en $TiO_2$ une épaisseur faible, ce qui permet d'obtenir un vitrage dont la couleur en réflexion $R_1L$ bronze est assez appréciée esthétiquement dans le bâtiment. Il est clair, cependant, qu'en jouant sur cette épaisseur, et notamment en l'augmentant sensiblement, on obtient un effet interférentiel permettant de modifier cette tonalité. Ceci permet alors de pouvoir offrir des vitrages ayant différentes valeurs de $T_L$, et, pour chacune de ces valeurs, différentes couleurs en réflexion $R_1L$, sélection d'épaisseur(s) qui peut s'opérer bien sûr pour n'importe quel exemple selon l'invention.

En conclusion, la présente demande concerne des vitrages dont la résistance à la corrosion est excellente. En outre, il est possible d'obtenir des vitrages présentant une large gamme de propriétés spectrophotométriques.

Ainsi, en faisant varier l'épaisseur de la couche fonctionnelle, on peut sélectionner la transmission lumineuse souhaitée. De plus en ne modifiant que l'épaisseur de la sous-couche, on diversifie la gamme de couleurs pastel en réflexion $R_1L$, en maintenant une valeur de $T_L$ à peu près constante.

Il va de soi, alors, qu'en modifiant à la fois l'épaisseur de la sous-couche et celle de la couche fonctionnelle, on obtient des substrats à couches minces de différentes couleurs en réflexion $R_1L$ et, pour chacune de ces couleurs, différentes transmissions lumineuses $T_L$ et transmissions énergétiques $T_E$.

On peut également sélectionner une épaisseur de sur-couche plus ou moins importante afin soit de la cantonner dans un rôle de protection, soit également lui conférer un rôle interférentiel.

Il est à noter également qu'en sélectionnant de manière adéquate les épaisseurs des couches, il est possible de moduler également la réflexion $R_2L$.

## Revendications

1. Substrat en verre à multicouches minces comportant une couche fonctionnelle (3) disposée entre une sous-couche (2) et une sur-couche (4), *caractérisé en ce que* ladite couche fonctionnelle (3) appartient à la famille des aciers inoxydables, *en ce que* la sous-couche (2) est à base d'oxyde de titane, d'oxyde d'étain ou d'oxyde de tantale *et en ce que* la sur-couche (4) est en composé métallique appartenant au groupe de l'oxyde de titane, du nitrure de titane et de l'oxyde de tantale.

2. Substrat selon la revendication 1, *caractérisé en ce que* la couche fonctionnelle (3) est nitrurée.

3. Substrat selon l'une des revendications 1 ou 2, *caractérisé en ce que* l'épaisseur de la couche fonctionnelle (3) est inférieure à 100 nm, notamment est comprise entre 15 et 45 nm.

4. Substrat selon l'une des revendications 1 à 3, *caractérisé en ce que* l'épaisseur de la sous-couche (2) en oxyde est comprise entre 10 et 220 nm.

5. Substrat selon l'une des revendications 1 à 4, *caractérisé en ce que* l'épaisseur de la sur-couche (4) en composé métallique placée sur la couche fonctionnelle (3) est comprise entre 5 et 100 nm.

6. Substrat selon l'une des revendication 1 à 5, *caractérisé en ce que* sont déposés sur le substrat (1) en verre clair respectivement une couche (2) de $TiO_2$ d'environ 15 nm d'épaisseur puis une couche fonctionnelle (3) en acier nitruré, puis une couche (4) d'oxyde de titane notamment d'environ 10 nm d'épaisseur, l'épaisseur de la couche fonctionnelle (3) étant adaptée afin que le substrat muni de ces trois couches présente une transmission lumineuse d"environ 21%.

7. Substrat selon l'une des revendications 1 à 6, *caractérisé en ce que* les couches non purement métalliques sont obtenues par pulvérisation cathodique réactive sous vide assistée par champ magnétique, les oxydes métalliques en présence d'oxygène, et les couches fonctionnelles nitrurées et/ou de nitrures en présence d'azote.

8. Application du substrat selon l'une des revendications 1 à 6 à un vitrage de protection solaire destiné au bâtiment ou à l'automobile.

## Claims

1. Glass substrate having thin multilayers with a functional layer (3) positioned between an underlayer (2) and an overlayer (4), characterized in that the said functional layer (3) belongs to the family of stainless steels, in that the underlayer (2) is based on titanium oxide, tin oxide or tantalum oxide and in that the overlayer (4) is of a metal compound belonging to the group formed by titanium oxide, titanium nitride and tantalum oxide.

2. Substrate according to claim 1, characterized in that the functional layer (3) is nitrided.

3. Substrate according to one of the claims 1 or 2, characterized in that the thickness of the functional layer (3) is below 100 nm and in particular between 15 and 45 nm.

4. Substrate according to one of the claims 1 to 3, characterized in that the thickness of the oxide underlayer (2) is between 10 and 220 nm.

5. Substrate according to one of the claims 1 to 4, characterized in that the thickness of the metal compound overlayer (4) placed on the functional layer (3) is between 5 and 100 nm.

6. Substrate according to one of the claims 1 to 5, characterized in that on the clear glass substrate (1) are respectively deposited a roughly 15 nm thick $TiO_2$ layer (2), then a nitrided steel, functional layer (3) and then a more particularly approximately 10 nm thick, titanium oxide layer (4), the thickness of the functional layer (3) being adapted so that the substrate provided with its three layers has a light transmission of approximately 21%.

7. Substrate according to one of the claims 1 to 6, characterized in that the not purely metallic layers are obtained by magnetic field-assisted, vacuum, reactive cathodic sputtering, the metal oxides in the presence of oxygen, and the nitrided and/or nitride, functional layers in the presence of nitrogen.

8. Application of the substrate according to one of the claims 1 to 6 to a sun protection glazing intended for use in buildings or cars.

**Patentansprüche**

1. Glassubstrat mit mehreren dünnen schichten, die eine zwischen einer Haftschicht (2) und einer Deckschicht (4) angeordnete Funktionsschicht (3) enthalten, **dadurch gekennzeichnet, daß** die Funktionsschicht (3) zur Gruppe der rostfreien Stähle gehört **und daß** die Haftschicht (2) auf der Basis von Titanoxid, Zinnoxid oder Tantaloxid ist **und** die Deckschicht (4) aus einer Metallverbindung besteht, die zu der Gruppe aus Titanoxid, Titannitrid und Tantaloxid gehört.

2. Substrat nach Anspruch 1, **dadurch gekennzeichnet, daß** die Funktionsschicht (3) nitridiert ist.

3. Substrat nach Anspruch 1 oder 2, **dadurch gekennzeichnet, daß** die Dicke der Funktionsschicht (3) kleiner als 100 nm ist und insbesondere 15 bis 45 nm beträgt.

4. Substrat nach einem der Ansprüche 1 bis 3, **dadurch gekennzeichnet, daß** die Dicke der Haftschicht (2) aus dem Oxid 10 bis 220 nm beträgt.

5. Substrat nach einem der Ansprüche 1 bis 4, **dadurch gekennzeichnet, daß** die Dicke der auf der Funktionsschicht (3) angeordneten Deckschicht (4) aus der Metallverbindung 5 bis 100 nm beträgt.

6. Substrat nach einem der Ansprüche 1 bis 5, **dadurch gekennzeichnet, daß** auf dem Substrat (1) aus Klarglas eine etwa 15 nm dicke $TiO_2$-Schicht (2), darauf eine Funktionsschicht (3) aus nitridiertem Stahl und darauf eine insbesondere etwa 10 nm dicke Titanoxidschicht (4) aufgebracht ist, wobei die Dicke der Funktionsschicht (3) angepaßt ist, damit das mit diesen drei Schichten versehene Substrat einen Lichttransmissionsgrad von etwa 21 % besitzt.

7. Substrat nach einem der Ansprüche 1 bis 6, **dadurch gekennzeichnet, daß** die nicht rein metallischen Schichten durch magnetfeldunterstützte reaktive Kathodenzerstäubung unter Vakuum, dabei die Metalloxide in Gegenwart von Sauerstoff und die Funktionsschichten, die nitridiert und/oder Nitride sind, in Gegenwart von Stickstoff erhalten werden.

8. Verwendung des Substrats nach einem der Ansprüche 1 bis 6 in einer Sonnenschutzverglasung, die für ein Gebäude oder Automobil vorgesehen ist.

FIG.1